# EUROPÄISCHE PATENTANMELDUNG

(11) **EP 2 045 123 A1**
(43) Veröffentlichungstag der Anmeldung: **08.04.2009**
(21) Anmeldenummer: 07117640.8
(22) Anmeldetag: 01.10.2007
(51) Int. Cl.: B60P 1/64

(54) **Hubaufbau für Kleintransportfahrzeuge**

(71) Anmelder: Roelli, Felix, 6371 Stans (CH)
(72) Erfinder: Roelli, Felix, 6371 Stans (CH)
(74) Vertreter: Troesch Scheidegger Werner AG

(57) **Zusammenfassung**

Hubaufbau für Kleintransportfahrzeuge mit hinter der Fahrerkabine angeordneter Brücke mit zwei Längs-Seitenwänden, gekennzeichnet durch eine Hubeinrichtung aus zwei zu beiden Seiten innerhalb der Seitenwände am Brückenende motorisch schwenkbar angeordneten, sich über etwa die halbe Brückenlänge nach vorn erstreckenden kastenförmigen Grundträgern mit teleskopisch aus- bzw. einfahrbaren Verlängerungen, an deren freien Enden jeweils ein etwa U-förmiges nach oben und rückwärts verlaufendes Endstück vorgesehen ist, an deren Enden Mittel vorgesehen sind, um auf die Brücke auf- bzw. von dieser abzusetzende Module anzuhängen, das Ganze derart, dass die Hubeinrichtung bei leerer Fahrstellung mit ihren freien Enden an das vordere Brückenende fahrbar ist, während Arbeitsstellungen durch teleskopische Anpassung der seitlichen Träger und deren Verschwenken um die Schwenkachse am Brückenende ansteuerbar sind.

## Beschreibung

Die vorliegende Erfindung betrifft einen Hubaufbau für Kleintransportfahrzeuge mit hinter der Fahrerkabine angeordneter Brücke mit zwei Längs-Seitenwänden.

Hubaufbauten bei sog. Pickups sind bekannt und dienen dazu, Module, wie z.B. kleinere Mulden, mit solchen Fahrzeugen zu transportieren. Bisher wurden dazu z.B. schwenkbare vertikale oder diagonale Teleskoparme eingesetzt. Bei Nichtverwendung sind die bekannten Aufbauten jedoch oft störend.

Aufgabe der vorliegenden Erfindung war es einen Hubaufbau der Eingangs definierten Art zu schaffen, welcher bei optimaler Erfüllung der Grundaufgabe bei Nichteinsatz ebenfalls optimal "parkiert" ist.

Diese Aufgabe wird bei einem Hubaufbau der oben definierten Art erfindungsgemäß durch die Merkmale des kennzeichnenden Teils von Anspruch 1 gelöst.

Besonders vorteilhafte Ausführungsformen sind in den abhängigen Ansprüchen definiert.

Die Erfindung wird nachstehend anhand eines in der Zeichnung dargestellten Ausführungsbeispiels noch etwas näher erläutert.

Es zeigt:
Fig. 1 rein schematisch einen erfindungsgemässen Hubaufbau;
Fig. 2 ebenfalls rein schematisch einen der teleskopisch veränderbaren Längsträger;
Fig. 3 ein mit einem erfindungsgemässen Hubaufbau ausgerüsteten Pickup mit verschiedenen Ladestellungen und
Fig. 4 und 5 zwei weitere Ansichten eines mit dem erfindungsgemässen Hubaufbau versehenen Fahrzeuges.

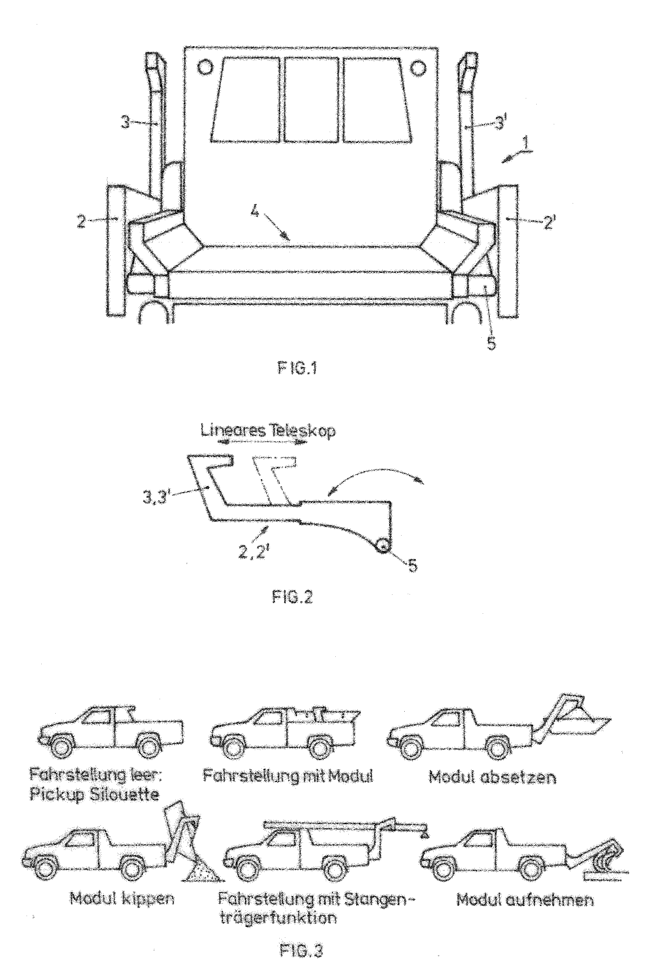

Bei dem in Figur 1 gezeigten Hubaufbau 1 bildet die eigentliche Brücke 4 einen Teil des Hubaufbaus, der zwei Längsträger 2,2' mit U-förmigen Endstücken 3,3' und eine torsionssteife Verbindungsstange 5 am hinteren Ende aufweist. Die Stange bzw. Welle 5 ist am hinteren Ende der Brückenauflage 4 schwenkbar gelagert, wobei die Schwenkbewegung über eine Hydraulik (nicht dargestellt) erfolgt. Ebenfalls hydraulisch erfolgt das teleskopische Aus- bzw. Einfahren der U-förmigen Endstücke 3,3' in die kastenförmigen Grundträger 2,2' (Längsträger).

Diese Konstruktion, bei welcher die Brückenauflage 4 sich zum Boden hin verjüngt um eine Zentrierung einer aufzuladenden Mulde zu bilden, ist bezüglich Kräfteverteilung und Ästhetik optimal. Die Form der Brückenauflage 4 schafft auch den für die Räder der Hinterachse erforderlichen Platz.

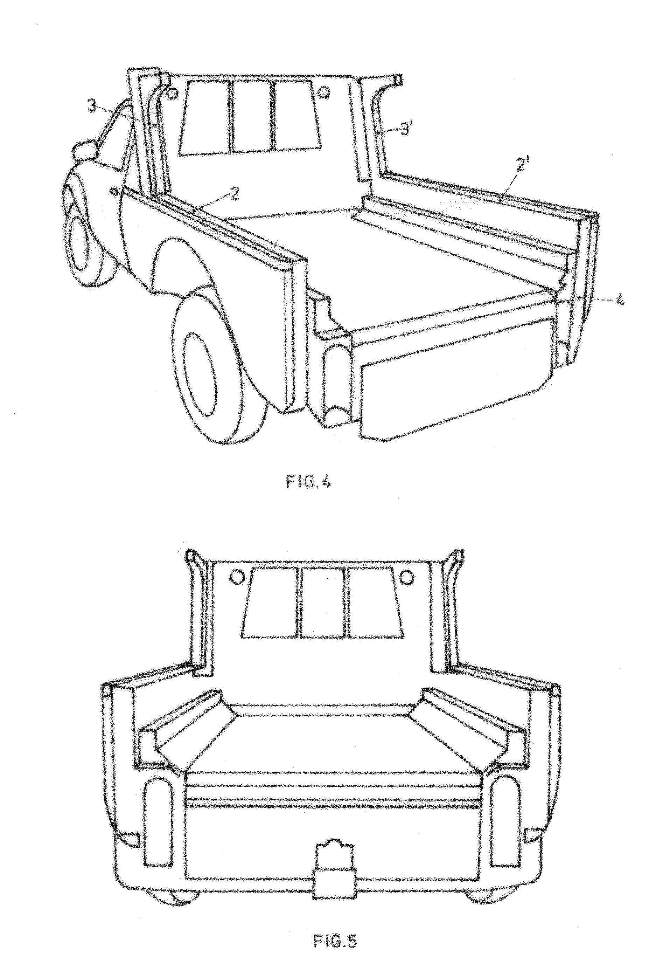

Figur 4 und 5 zeigen einen Hubaufbau im montierten und "parkierten" Zustand.

## Patentansprüche

1. Hubaufbau für Kleintransportfahrzeuge mit hinter der Fahrerkabine angeordneter Brücke mit zwei Längs-Seitenwänden, **gekennzeichnet durch** eine Hubeinrichtung aus zwei zu beiden Seiten innerhalb der Seitenwände am Brückenende motorisch schwenkbar angeordneten, sich über etwa die halbe Brückenlänge nach vorn erstreckenden kastenförmigen Grundträgern mit teleskopisch aus- bzw. einfahrbaren Verlängerungen, an deren freien Enden jeweils ein etwa U-förmiges nach oben und rückwärts verlaufendes Endstück vorgesehen ist, an deren Enden Mittel vorgesehen sind, um auf die Brücke auf- bzw. von dieser abzusetzende Module anzuhängen, das Ganze derart, dass die Hubeinrichtung bei leerer Fahrstellung mit ihren freien Enden an das vordere Brückenende fahrbar ist, während Arbeitsstellungen **durch** teleskopische Anpassung der seitlichen Träger und deren Verschwenken um die Schwenkachse am Brückenende ansteuerbar sind.

2. Hubaufbau nach Anspruch 1, **dadurch gekennzeichnet, dass** die beiden Grundträger über die Schwenkachse verdrehfest miteinander verbunden sind.

3. Hubaufbau nach Anspruch 1 oder 2, **dadurch gekennzeichnet, dass** der Schwenkantrieb und die teleskopische Veränderung der Längsträger mittels Hydraulikantrieb erfolgt.

4. Hubaufbau nach einem der Ansprüche 1 bis 3, **dadurch gekennzeichnet, dass** die U-förmigen Endstücke durch einen Querträger, z.B. einen rohrförmigen Träger, miteinander verbunden sind.

5. Hubaufbau nach einem der Ansprüche 1 bis 4, **dadurch gekennzeichnet, dass** die Brücke des Fahrzeuges zum Boden hin längsseits konisch verengt ist, um eine Zentrierung der aufzunehmenden Module, wie z.B. einer Mulde, durchzuführen.

6. Hubaufbau nach einem der Ansprüche 1 bis 5, **dadurch gekennzeichnet, dass** die Brücke des Fahrzeuges Teil der aufzusetzenden Hubeinrichtung bildet.
